# FASCICULE DE BREVET EUROPEEN

(11) **EP 0 715 695 B1**
(45) Date de publication et mention de la délivrance du brevet: **02.09.1998**
(21) Numéro de dépôt: 95924389.0
(22) Date de dépôt: 30.06.1995
(51) Int. Cl.: F16F 15/139, F16F 15/167, F16F 15/131

(54) **VOLANT AMORTISSEUR NOTAMMENT POUR VEHICULE AUTOMOBILE**
DÄMPFUNGSSCHWINGRAD, INSBESONDERE FÜR KRAFTFAHRZEUGE
FLYWHEEL PARTICULARLY FOR MOTOR VEHICLES

(30) Priorité: 30.06.1994 FR 9408035
(43) Date de publication de la demande: 12.06.1996
(73) Titulaire: VALEO, 75017 Paris (FR)
(72) Inventeur: MOKDAD, Ayman, F-93400 Saint-Ouen (FR); BOCHOT, Jean-Claude, F-77410 Claye-Souilly (FR)
(74) Mandataire: Gamonal, Didier
(86) Numéro de dépôt international: FR9500876
(87) Numéro de publication internationale: WO9600859

(56) Documents cités:
- DE-A- 2 931 423
- DE-A- 3 427 163
- DE-A- 4 135 631
- FR-A- 2 676 102
- GB-A- 2 160 296

## Description

La présente invention concerne les volants amortisseurs, notamment pour véhicule automobile, du genre comportant deux masses coaxiales, montées mobiles l'une par rapport à l'autre, à l'encontre de moyens élastiques à action circonférentielle et d'un dispositif de frottement à action axiale.

Un tel volant amortisseur, appelé aussi double volant amortisseur, est décrit par exemple dans le document FR-A-2 565 650. Un tel volant amortisseur est destiné à filtrer les vibrations qui prennent naissance tout au long de la chaîne cinématique que constitue la transmission, chaîne cinématique qui, sur un véhicule automobile, va du moteur à combustion interne aux arbres de roue.

Dans ce document, le dispositif de frottement intervient entre la première masse (un plateau de celle-ci) destinée à être fixée à un arbre d'entraînement (le vilebrequin du moteur du véhicule) et un disque fixé sur la seconde masse comportant un plateau de réaction pour un embrayage à friction et ce à la périphérie interne du volant amortisseur.

Il en résulte qu'il faut usiner le plateau de la première masse à cet endroit et que le dispositif de frottement augmente l'encombrement axial du volant à cet endroit.

Cependant, un tel dispositif est bien adapté pour recevoir des moyens élastiques agissant circonférentiellement entre les deux masses. Or, il est souhaitable, pour réaliser un bon filtrage des vibrations mécaniques, de disposer d'inerties élevées sur la première masse.

A l'inverse de cette exigence, l'usinage de la première masse, les formes nécessaires pour le passage du dispositif de frottement et le placement des moyens élastiques circonférentiels conduisent à réduire cette inertie.

La présente invention a pour objet de créer une nouvelle architecture de volant amortisseur, dit double volant, dans lequel les inerties sont aussi élevées que possible.

En effet, la présente invention concerne un volant amortisseur, notamment pour véhicule automobile, du genre comportant deux masses coaxiales, montées mobiles l'une par rapport à l'autre à l'encontre de moyens élastiques à action circonférentielle et d'un dispositif de frottement à action axiale. L'une des masses, dite première masse, est propre à être calée en rotation sur un arbre menant tandis que l'autre masse, dite seconde masse, comporte un plateau de réaction offrant une face de friction pour un disque de friction propre à être calée en rotation sur un arbre mené. Un tel volant amortisseur est connu du FR-A-2 565 650.

L'invention se caractérise principalement par le fait que les moyens élastiques sont disposés entièrement en-dessous radialement de la périphérie interne de la face de friction de la seconde masse, et en ce que la seconde masse présente une cambrure de façon à recouvrir partiellement les moyens élastiques installés sur la première masse.

Grâce à l'invention on peut augmenter l'inertie de la première masse, celle-ci pouvant être massive au niveau de la face de friction de la seconde masse.

Cette disposition permet de réduire l'encombrement axial du volant amortisseur, car les moyens élastiques ne sont pas en vis-à-vis de la face de friction, et sont recouvert par la cambrure.

En outre, il n'y a pas de creusures à pratiquer à cet endroit en sorte que le plateau de réaction est plus robuste.

On appréciera que la ou les creusures, que présente la première masse pour montage desdits moyens élastiques, sont implantées sur une circonférence de diamètre inférieur à celle de l'art antérieur, en sorte que l'inertie de la première masse est augmentée.

Selon un autre aspect de l'invention, le dispositif de frottement est disposé radialement au dessus des moyens élastiques.

En variante le dispositif de frottement est disposé radialement en-dessous des moyens élastiques, ce qui permet d'augmenter encore l'inertie de la première masse.

Selon un autre aspect de l'invention, la seconde masse comporte des moyens de solidarisation à un voile, propre à agir sur lesdits moyens élastiques, ledit voile présentant un retour axial de forme tubulaire pénétrant à l'intérieur d'un alésage interne de ladite première masse et qui y est reliée en rotation par un palier antifriction.

Grâce à cette disposition on peut réduire l'encombrement axial du volant amortisseur à cet endroit et le palier antifriction a un petit diamètre.

En pratique ce palier est implanté radialement en-dessous des passages prévus dans les masses pour montage des vis de fixation du volant au vilebrequin du moteur.

Selon un autre aspect de l'invention, le voile présente des logements en forme de "U" limités par des bras radiaux entre lesquels sont logés les moyens élastiques, un élément de fermeture étant fixé sur la première masse en étant interposé entre les moyens élastiques et ladite seconde masse de façon à constituer une cavité rendue étanche par un double joint annulaire disposé entre la première masse et le voile d'une part, le voile et ledit élément de fermeture d'autre part.

Selon un autre aspect de l'invention, le double joint comporte une première partie dont le diamètre extérieur est engagé sur une saillie dièdre de ladite première masse et dont le diamètre intérieur est en appui en contact avec une partie inclinée dudit voile, et en ce que'il comporte une seconde partie dont le diamètre intérieur est engagé sur ladite partie inclinée dudit voile et dont le diamètre extérieur est en appui en contact avec la face intérieure de l'extrémité de l'élément de fermeture, au-delà d'une partie cambrée de celle-ci, partie cambrée destinée à s'insérer dans la cambrure de ladite seconde masse.

Selon un autre aspect de l'invention, le dispositif de frottement comporte une portée de frottement, disposée dans un logement de ladite première masse, sur sa face en regard de ladite seconde masse, sur laquelle est disposée une rondelle de frottement dont les mouvements sont entraînés par ladite seconde masse, sur laquelle appuie une rondelle d'application rappelée élastiquement vers elle par des moyens élastiques à action axiale.

Selon un autre aspect de l'invention, la portée de frottement est constituée par une zone plane d'extrémité externe de l'élément de fermeture qui présente de plus un rebord permettant par une rondelle annulaire de maintenir en action les moyens élastiques à action axiale.

Ainsi l'élément de fermeture a une triple fonction à savoir une fonction d'appui pour les moyens élastiques, une fonction de fermeture étanche de la cavité à l'intérieur de laquelle sont logés les moyens élastiques et une fonction de frottement.

Selon un autre aspect de l'invention, la mise en frottement est assurée par l'engagement d'au moins un bossage solidaire de la face en regard de ladite seconde masse.

Selon un autre aspect de l'invention, l'engagement est obtenu par un rebord correspondant du diamètre intérieur de la rondelle de frottement, notamment de façon à obtenir un engrènement avec jeu.

Grâce à toutes ces dispositions, on n'augmente pas l'encombrement axial entre le plateau de pression de l'embrayage et la première masse du volant amortisseur.

Ainsi il devient possible d'augmenter l'inertie de la première masse tout en implantant le dispositif de frottement radialement au-dessus ou en-dessous des moyens élastiques à action circonférentielle. Dans cette deuxième forme on simplifie les pièces du volant.

D'autres avantages et caractéristiques de la présente invention seront mieux compris à l'aide de la description et des figures annexées qui sont :
- la figure 1 : une demie vue en coupe droite d'un double volant amortisseur destiné à un embrayage selon un mode de réalisation préférée de l'invention ;
- la figure 2 : un détail agrandi du dispositif de frottement du double volant amortisseur de la figure 1 ;
- la figure 3 : un détail agrandi dans une vue de face des moyens élastiques à action circonférentielle du double volant amortisseur de la figure 1 ;
- la figure 4 : une vue analogue à la figure 1 pour un autre exemple de réalisation ;
- la figure 5 : une vue en coupe selon la ligne 5-5 de la figure 4.

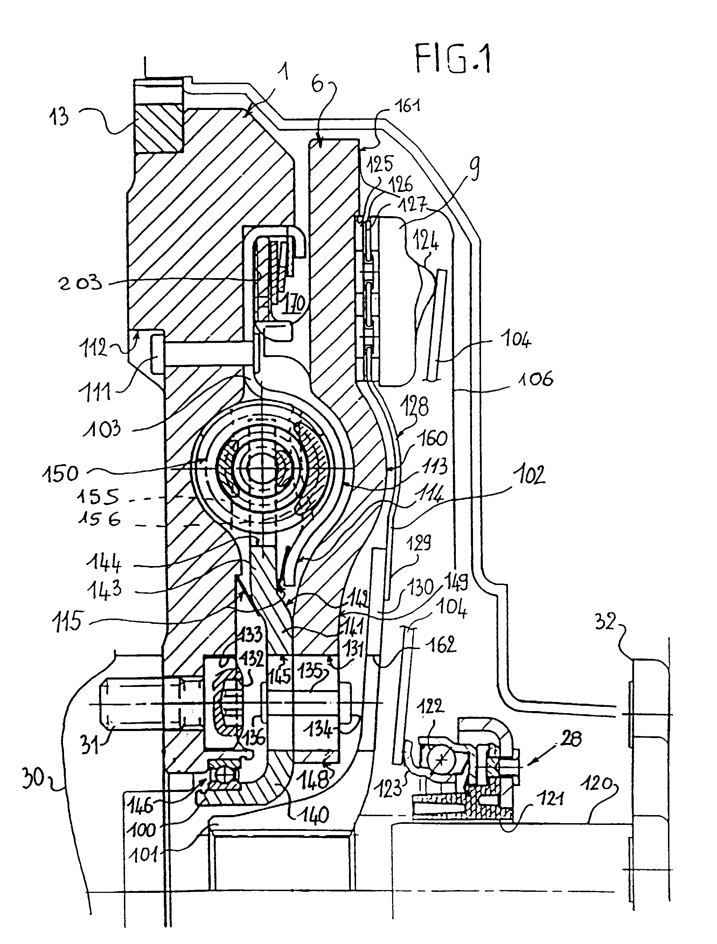

A la figure 1, on a représenté une demi-vue en coupe axiale d'un embrayage selon la présente invention dans un mode préféré de réalisation de celle-ci. L'embrayage de l'invention comporte un volant amortisseur, dénommé usuellement double volant amortisseur, délimité par une première masse 1 et une seconde masse 6, et un embrayage classique, comprenant notamment un diaphragme 104 agissant sur un plateau de pression 9 s'appuyant sur un disque de friction 127, qui agit par son autre face sur le plateau de réaction 161 plus précisément sur la face de friction 125 en regard de la seconde masse 6 du double volant amortisseur.

Ce double volant comporte de manière connue en soi deux masses coaxiales 1,2, montées mobiles l'une par rapport à l'autre, à l'encontre de moyens élastiques à action circonférentielle 150 et d'un dispositif de frottement à action axiale 170.

Plus précisément un arbre menant 30, ici dans l'application pour véhicule automobile constitué par l'extrémité de sortie du vilebrequin du moteur à combustion interne du véhicule, est fixé par des vis 31 sur la zone centrale d'un disque épais qui constitue la première masse 1, du volant à double masse de l'embrayage de l'invention. Le disque 1 présente à sa périphérie, vers l'extérieur, une couronne dentée 13 qui est propre à engrener avec le pignon de sortie d'un démarreur, ainsi qu'il est connu.

Le disque 1 est percé dans sa zone centrale d'un alésage aligné sur l'axe de rotation du vilebrequin et de l'embrayage, alésage à travers lequel passe un retour annulaire d'orientation axiale 100 d'un voile 140. Le voile 140 présente une partie 141 sensiblement en forme d'anneau plan perpendiculaire à l'axe de rotation précité et qui est percée d'alésages 145 répartis régulièrement circonférentiellement pour le passage des vis de fixation 31.

La partie 141 est rattachée d'une part au retour axial précité 100 de forme tubulaire et d'autre part, par une partie inclinée 142 à une seconde partie 143, aussi sensiblement en forme d'anneau plan perpendiculaire à l'axe de rotation, et percé de logements 144 pour permettre le placement des moyens élastiques 150 à action circonférentielle.

Les logements 144 du voile 140 sont répartis angulairement autour de l'axe de rotation, au nombre de trois dans un exemple de réalisation. Les logements 144 sont sensiblement en forme de U délimités par des bras externes radiaux 151 et présentent une ouverture angulaire suffisante pour le placement et le montage des moyens élastiques 150 entre les bras 151 délimitant circonférentiellement les logements 144 et formant les branches desdits logements.

Le voile 140 est enfin monté par la surface extérieure de son retour axial 100 sur un palier 146 antifriction.

Le palier 146 consiste ici en un roulement à billes dont la bague externe est montée dans une gorge pratiquée dans l'alésage central interne de la première masse 1 et dont la bague interne est montée sur le retour tubulaire 100.

Par ailleurs, le voile 140 est solidaire d'un disque épais 6 constituant en majeure partie la seconde masse du volant amortisseur. Le voile 140 fait donc corps avec la seconde masse 6, qui est solidaire en rotation de l'arbre mené, non représenté, par l'intermédiaire du disque de friction 127 lorsque l'embrayage est engagé de manière connue en soi.

La solidarisation de la seconde masse 6 en forme de disque et du voile 140 est obtenue par des moyens de solidarisation. Dans un mode préféré de réalisation, ces moyens de solidarisation sont constitués par des rivets 134,135,136, disposés à proximité du retour axial 100 du voile 140, insérés dans des trous répartis circonférentiellement entre les alésages 145 et 131, pratiqués respectivement dans le voile 140 et dans la seconde masse 6 pour le passage des vis 31.

Ces trous alternent donc avec les alésages 145 - 131 implantés radialement au-dessus du roulement à billes 146, qui a ainsi une taille réduite. En variante ce roulement 146 peut être remplacé par un palier lisse.

La seconde masse 6 présente aussi un alésage interne 148 centré sur l'axe de rotation précité, et une première partie interne 149 en forme d'anneau plan perpendiculaire audit axe de rotation. L'anneau plan 149 est poursuivi vers l'extérieur par une partie incurvée 160 qui se termine par une seconde partie en forme d'anneau 161 plan sensiblement parallèle à la première partie en forme d'anneau 149, qu'il termine vers l'extérieur et qui sert proprement dit de plateau de réaction à l'embrayage.

C'est cette partie 161 qui offre la face de friction 125 pour le disque 127.

On notera, grâce au retour 100, que l'encombrement axial du volant est réduit à cet endroit, la seconde masse présentant un alésage interne 148 de diamètre supérieur à celui du retour tubulaire 100.

La partie incurvée ou cambrure 160 de la seconde masse 6 est un mode préféré de réalisation de la conformation de la seconde masse de façon à la faire recouvrir partiellement les moyens élastiques à action circonférentielle 150, installés sur le voile 140. Cette cambrure permet en particulier de ne pas augmenter l'encombrement axial du double volant amortisseur à masses constantes.

L'alésage ménagé à l'intérieur du retour axial 100 du voile 140 reçoit un moyeu 101, qui se poursuit par une partie en forme d'anneau incliné 130. Cette partie inclinée 130 est percée d'alésages 162, répartis circonférentiellement à proximité de l'alésage central, et de façon à permettre d'accéder avec un outil par exemple une clé alène à chaque tête creuse 132 des vis 31 de fixation de la première masse 1 sur le vilebrequin. Ce moyen est répété sur chaque vis 31, et chaque alignement d'alésages, comme 145, 131 et 162, régulièrement espacés (douze fois, dans un exemple de réalisation) autour de l'axe de rotation.

De cette façon, il est possible de démonter et de remonter l'ensemble de l'embrayage sur le vilebrequin, sans avoir à démonter le double volant amortisseur de l'invention.

Bien entendu le diaphragme 104 présente aussi des alésages en alignement avec les alésages 145,131,162.

La tête de chaque vis 30 est engagée dans un lamage 133 correspondant du disque 1 de façon à s'intégrer au niveau de la surface du disque sans exiger que cette surface soit trop éloignée de la surface en regard de la première partie annulaire 141 du voile 140, et sans réduire de façon trop importante la masse de la première masse d'inertie 1.

Le moyeu 101 est cannelé intérieurement pour solidarisation en rotation du disque de friction 127 à l'arbre d'entrée (non représenté) ou arbre mené, d'une boîte de vitesses 32.

Sur l'extrémité de la partie 130 en forme d'anneau incliné du moyeu 101, extrémité radialement éloignée de l'axe de rotation du moyeu 101, on solidarise par soudage, rivetage ou autrement un disque cambré 128 par son bord interne 129, en recouvrement avec ladite extrémité. La cambrure du disque 128 est destinée à s'adapter avec la cambrure correspondante 160 de la seconde masse 6 du double volant.

Le disque 128 porte à fixation, ici par rivetage, au niveau de son extrémité radiale (ou périphérie) externe, sur chacune de ses faces, une garniture de friction 126.

Ainsi le disque de friction 127 avec sa partie inclinée 130 et son disque cambré permet de ne pas augmenter l'encombrement axial du double volant, le plateau de pression 9 gardant la même position que dans l'art antérieur. On notera que le moyeu 101 est profilé pour venir au plus près du voile 140 et du disque 6.

Il est d'épaisseur croissante à sa base en allant dans le sens axial du disque 1 au disque 6.

Les garnitures 126, de manière connue en soi, sont destinées à être serrées, sous l'action du diaphragme 104 prenant appui sur un couvercle (représenté schématiquement par sa trace en 106), fixé à sa périphérie externe sur le plateau 161, entre le plateau de pression 9 et de réaction 161.

Plus précisément les garnitures de friction 126 sont destinées à être serrées entre la surface en regard du plateau de pression 9 et la face de friction 125 du plateau de réaction 161. Ainsi l'embrayage est normalement engagé.

On remarque ici au dessin le placement des moyens élastiques 150 selon l'invention sous la zone d'activité de friction entre le plateau de pression 9, le plateau de pression 161 (la face de friction 125) et les garnitures 126 du disque de friction 127. Cette disposition permet d'augmenter l'inertie de la première masse 1 du volant amortisseur, notamment d'augmenter l'épaisseur de la masse 1 à sa périphérie externe.

Selon l'invention les moyens élastiques 150 sont donc disposés entièrement radialement en-dessous de la périphérie interne de la face de friction 125 de la seconde masse 6.

Ainsi qu'on le sait le plateau de pression 9 présente un bossage 124 fragmenté pour appui de la partie périphérique externe de la rondelle Belleville du diaphragme 104, dont les extrémités internes de ces doigts sont destinées à être soumises à l'action d'une butée de débrayage 28. Cette butée de débrayage comporte un élément de manoeuvre 121 propre à être soumis à l'action d'une fourchette de débrayage et un élément d'attaque 123, ici sous forme d'un roulement à billes, propre à agir sur les extrémités internes des doigts du diaphragme 104.

L'élément de manoeuvre 121 est monté coulissant le long d'un tube-guide 120, appelé trompette de débrayage, entourant l'arbre d'entrée de la boîte de vitesses 32.

Cette trompette est fixée au carter de la boîte de vitesses 32.

Ainsi en agissant en poussée sur les extrémités des doigts du diaphragme, on fait basculer celui-ci afin de faire cesser son action sur le plateau de pression 9 et de libérer les garnitures de friction 126 du disque de friction 127 pour désengager l'embrayage, qui est normalement engagé.

Pour le montage pivotant du diaphragme on se reportera par exemple au document FR-A-2 565 650, ledit diaphragme étant monté pivotant sur le couvercle 106 à l'aide par exemple de colonnettes non représentées.

En variante la butée de débrayage peut agir en traction sur les extrémités des doigts du diaphragme, l'embrayage étant alors du type tiré.

Dans ce cas, la périphérie externe de la rondelle Belleville du diaphragme prend appui sur le couvercle, tandis que la partie périphérique interne de ladite rondelle Belleville prend alors appui sur le bossage 124 du plateau de pression 9.

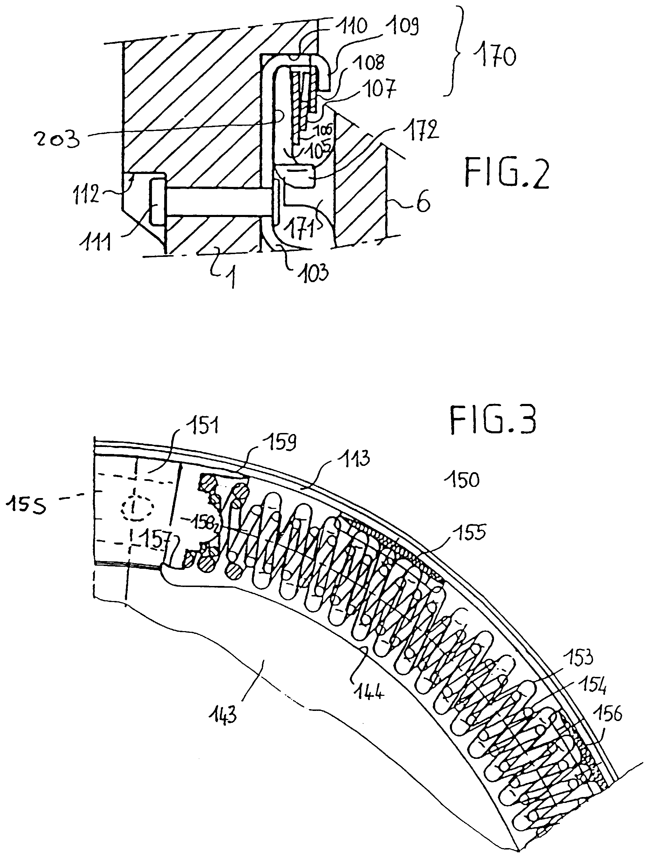

Le dispositif de frottement 170 à action axiale, qui a été représenté agrandi et détaillé à la figure 2, est installé entre les faces en regard des première 1 et seconde 6 masses du double volant amortisseur. Ce dispositif de frottement est implanté ici radialement au niveau de la face de friction 125 du plateau de pression 161 c'est-à-dire radialement au-dessus des moyens élastiques à action circonférentielle 150 à la périphérie externe du disque 1 selon une caractéristique de l'invention.

Le dispositif de frottement 170 agit entre les deux masses et comporte principalement une rondelle de frottement 105 en contact de frottement avec une portée de frottement 203 solidaire de l'une des deux masses. Il comporte aussi une rondelle d'application 106, soumise à l'action de moyens élastiques à action axiale 107 pour serrage de la rondelle de frottement 105 entre la rondelle d'application 106 et la portée de frottement 203.

Ici la portée de frottement 203 est solidaire de la première masse 1 de manière décrite ci-après et la rondelle d'application 106 est propre à être calée en rotation sur la première masse 1.

Plus précisément dans le mode de réalisation des figures 1 à 3, les moyens élastiques à action axiale 107 consistent en une rondelle Belleville de forme tronconique à l'état libre.

En variante ces moyens élastiques peuvent comporter deux rondelles Belleville ou consister en une rondelle ondulée.

Suivant une caractéristique de l'invention, la portée de frottement 203 est constituée directement par la face en regard de l'élément ou pièce de fermeture 103 solidaire ici de la première masse 1.

C'est donc la périphérie externe de la pièce de fermeture 103 qui offre la portée de frottement 203.

On notera que la pièce de fermeture 103 est montée sur la première masse à la faveur d'un dégagement délimité par un alésage interne 110 de centrage d'orientation axiale, que présente la première masse 1 à sa périphérie externe.

La pièce de fermeture 103 est ainsi montée dans un logement de la première masse en étant fixée sur celle-ci à l'aide de rivets 111.

On notera que cette pièce 103 présente ainsi à sa périphérie externe un retour d'orientation axiale en forme de peigne avec des fentes, dont les extrémités libres 109 sont rabattues radialement vers l'intérieur.

Le retour axial est centré par l'alésage 110 précité en étant dirigé vers la seconde masse 6.

On notera que la rondelle d'application 106 présente à sa périphérie externe des pattes, non visibles, engrenant avec les fentes, que présente le retour axial de la pièce de fermeture 103. La rondelle d'application 106 est ainsi calée en rotation sur la pièce 103 en étant montée mobile axialement par rapport à celui-ci.

La rondelle Belleville 107 prend appui, d'une part, sur la rondelle 106, et, d'autre part, sur une rondelle de butée 108 interposée entre les pattes 109 et la rondelle 107.

La rondelle de frottement 105 présente à sa périphérie interne un retour 172 d'orientation axiale. Ce retour 172 est doté d'évidements pour formation de mortaises à l'intérieur desquelles pénètrent, de manière complémentaire ici à jeu, des tenons 171. Ces tenons 171, saillants axialement, sont solidaires de la seconde masse 6 en étant venus de moulage avec celle-ci. Les tenons 171 s'étendent radialement au-delà des moyens élastiques 150.

La rondelle 105 peut engrener avec ou sans jeu avec les tenons 171.

Ainsi lors du mouvement relatif entre les deux masses 6 et 3 la rondelle 105 frotte contre la portée 203 et contre la rondelle d'application 106.

On notera que les rivets 111 sont installés par leur tête dans des cavités 112 de la première masse 1, lesdites cavités étant délimitées par la face extérieure de la masse 1 tournée à l'opposé de la seconde masse 6.

A l'aide des figures 1 et 3, on va maintenant décrire les moyens élastiques 150 à action circonférentielle qui agissent à l'encontre des deux masses mobiles 1 et 6 du double volant amortisseur de l'invention.

On remarque que les moyens élastiques à action circonférentielle sont placés sous le dispositif de frottement du double volant.

Leur placement sous (dans la direction radiale) le dispositif de frottement permet d'emmener la masse du premier volant 1 vers sa périphérie, et donc avec un rayon de giration plus élevé, ce qui maximise le moment d'inertie sans augmenter notablement le poids de l'ensemble entraîné en rotation.

A la figure 3, on a représenté une vue partielle, en éclaté, qui montre les moyens 150 élastiques à action circonférentielle. Ils sont constitués par des ressorts à boudin concentriques 153 et 154 qui sont disposés dans les logements 144 en forme de "U" de la seconde partie annulaire 143 du voile 140.

Les extrémités des ressorts concentriques 153 et 154 sont logées sur des coupelles comme 157, 158 disposées sur les bras radiaux comme 151 du voile 140.

Chaque coupelle comporte un téton central 158, qui permet de maintenir l'extrémité correspondante du ressort à boudin intérieur 153. Elle comporte aussi un logement annulaire 157 qui permet de recevoir l'extrémité correspondante du ressort à boudin extérieur 154.

Chaque coupelle 157, 158 comporte un rebord 159 de guidage des ressorts qui sont aussi guidés par des patins de friction 155 et 156, qui sont logés sur la face en regard de la partie cambrée 113 de la pièce de fermeture 103 et viennent frotter contre elle lors du mouvement relatif du ressort extérieur 153 et de la pièce 113.

De ce fait, les moyens élastiques 150 sont logés dans des cavités constituées par la forme en "U" 144 du voile 140, les bras 151 et la partie cambrée 113 de la pièce de fermeture 103 solidaire de la première masse 1 du double volant.

On notera que la première masse 1 est creusée pour loger les ressorts 150 et qu'il est défini avec la partie cambrée de l'élément ou pièce de fermeture 103 un canal annulaire.

La creusure de la masse 1 réduit le poids de celle-ci mais cela n'est pas gênant pour l'inertie compte tenu de l'implantation des moyens élastiques 150 en-dessous de la face de friction 125.

La cavité ainsi constituée est rendue étanche par le rivetage 111 de la pièce de fermeture 103 et par un double joint annulaire 115 (ou double rondelle d'étanchéité), qui porte de part et d'autre du voile 140 au niveau de sa partie inclinée 142. La première partie (l'une des rondelles d'étanchéité) du double joint annulaire 115 est calée par son diamètre extérieur sur une saillie dièdre (non repérée au dessin), dirigée vers l'axe de rotation et pratiquée sur la face intérieure de la première masse 1 du double volant amortisseur. Le diamètre intérieur de la première partie du joint annulaire 115 vient en appui en contact sur la face en regard de la partie incurvée 142 du voile 140. Ces parties ou rondelles d'étanchéité sont montées sous précontrainte en étant inclinées.

De l'autre côté du voile 140, la seconde partie (la seconde rondelle d'étanchéité) du double joint annulaire 115 est bloquée par son diamètre intérieur sur la partie 142 inclinée de la face interne du voile 140 en regard de la seconde masse 6. Le diamètre extérieur de la seconde partie du double joint vient en appui en contact sur la face intérieure de l'extrémité libre 114 de l'élément 103 en-dessous de la cambrure 113 de la pièce de fermeture 103.

La cavité étanche ainsi constituée est remplie de graisse pour lubrifier le glissement des ressorts lors de leur compression.

Les moyens 150 élastiques à action circonférentielle agissent, grâce notamment aux bras 151, de façon à réaliser un dispositif amortisseur de torsion mécaniquement interposé entre les deux masses du double volant. Ainsi, de manière connue en soi, lors du débattement angulaire relatif entre les deux masses 1 et 6, les ressorts 153 et 154 sont comprimés.

Bien entendu la pièce de fermeture est emboutie localement en 156 en regard des bras 151 pour appui des extrémités circonférentielles des ressorts 153, 154 et la masse 1 porte en regard des bras 151 et des emboutis des plaquettes 155 pour appui des extrémités des ressorts 153,154. Plus précisément ces appuis sont réalisés indirectement par les coupelles 157,158. Les plaquettes 155 sont fixées par rivetage sur la première masse.

La description a été donnée seulement à titre d'exemple et l'homme de métier saura adapter l'invention à d'autres modes de réalisation compris dans la portée des revendications annexes.

En particulier les rondelles 106,107,108 peuvent être portées par les bossages ou tenons 171, la rondelle d'application engrenant par des pattes avec les bossages 171. Dans ce cas la rondelle 105 peut être entraînée en rotation par le pied des rivets 111, la rondelle 108 étant en appui sur la première masse.

On appréciera, par rapport au document FR-A-2 565 650, que la première masse est simplifiée en étant dépourvue de moyeu central.

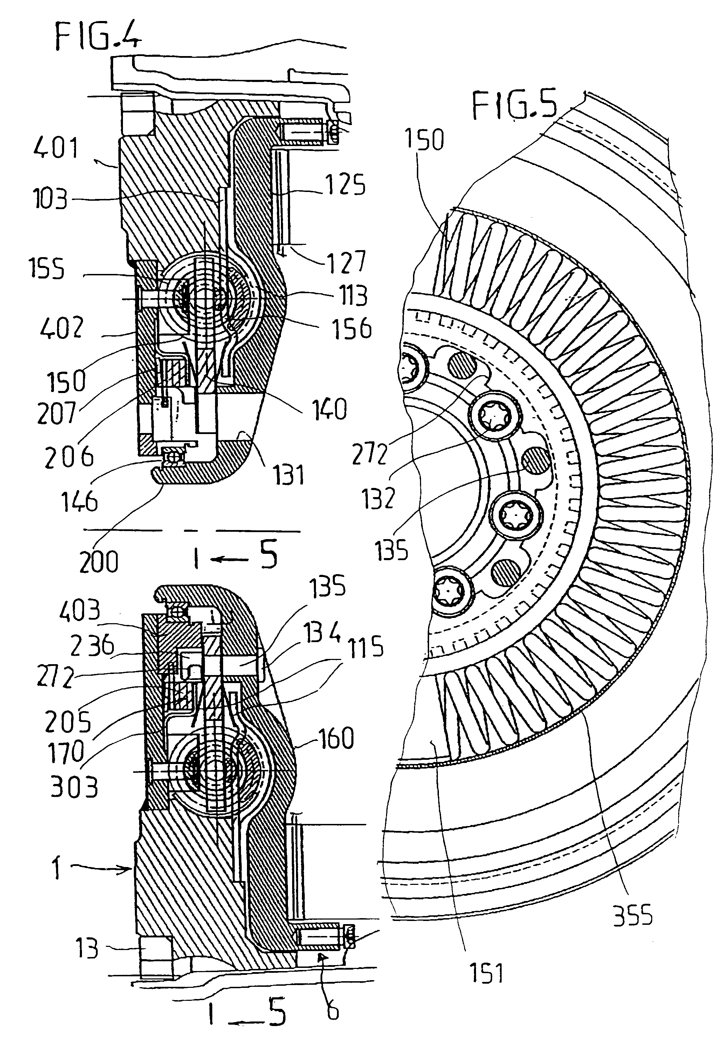

Bien entendu la présente invention n'est pas limitée à l'exemple de réalisation décrit. Ainsi alors dans la figure 1 la première masse peut être en fonte, celle-ci (figures 4 et 5) peut être en acier et comporter trois parties 401,402,403 reliées entre elles par soudage ou en variante par rivetage.

Ainsi la partie 401 porte la couronne de démarreur 13 et s'étend à la périphérie externe de la première masse 1. La partie 402 consiste en un flasque de support présentant des trous (non référencés) pour le passage des vis de fixation au vilebrequin.

La troisième partie 403 est de forme tubulaire et c'est elle qui est emmanchée sur la bague externe du roulement à billes 146.

Dans ces figures 4 et 5, la seconde masse 6 est conformée à sa périphérie interne pour présenter un retour tubulaire 200 remplaçant le retour 100 de la figure 1.

Pour ce faire la masse 6 est d'épaisseur décroissante à sa périphérie interne et sa face tournée à l'opposé de la première masse est inclinée en allant de la cambrure 160 au retour tubulaire 200 avec formation d'un arrondi pour raccordement du retour tubulaire 200 à la partie principale, globalement d'orientation transversale de la masse 6.

On notera qu'en pratique la masse 6 est nervurée entre la cambrure 160 et le retour tubulaire 200.

Ainsi qu'on l'aura compris, la forme de cette masse est conformée pour épouser la forme du moyeu 101 de la figure 1.

Dans cette figure le voile 140 est simplifié et est globalement de forme plane en étant fixé par les rivets 134,135,236.

On notera que les rondelles d'étanchéité 115, montées de part et d'autre du voile 140, sont dotées à leur périphérie externe de trous pour passage du fût 135 des rivets de fixation 134,135,236.

Ainsi ces rondelles 115 sont solidarisées en rotation à la seconde masse 6. Ici l'une des rondelles est pincée entre la masse 6 et le voile 140, tandis que l'autre est pincée entre le voile 140 et la tête 236 des rivets de fixation 134,135,236.

Dans ces figures le dispositif de frottement à action axiale 170 est implanté radialement en-dessous des moyens élastiques 150 ce qui permet d'augmenter encore l'inertie de la partie périphérique externe 401 de la masse 1.

Ce dispositif de frottement comporte successivement, dans le sens axial allant du flasque 402 à la seconde masse 6, une rondelle élastique à action axiale 207, ici un diaphragme, en variante une rondelle ondulée, une rondelle d'application 206, une rondelle de frottement 205 et une portée transversale appartenant à une pièce 303 fixée sur le flasque 402.

Cette pièce 303 entoure les rondelles 207,206,205 et présente à sa périphérie externe un rebord transversal pour sa fixation au flasque 402. Elle présente également un flasque pour contact avec la rondelle de frottement 205. Ce flasque offre ainsi une portée de frottement pour la rondelle 205 et est dirigée radialement vers l'axe de l'ensemble, tandis que l'autre flasque (celui de fixation) est dirigé radialement en direction opposée de l'axe de l'ensemble.

La rondelle d'application 206 présente à sa périphérie interne des pattes avec des évidements, formant des mortaises, propres à engrener, ici sans jeu, avec des tenons complémentaires, que présente la pièce 403 de support du roulement 28 à sa périphérie externe.

La rondelle 205, de préférence en matière synthétique, présente à sa périphérie interne des évidements 272 formant des mortaises propres à engrener à jeu avec la tête 236 des rivets 134,135,236 conformés à cet effet.

On notera que la pièce 303 offre un appui à la périphérie externe de l'une des rondelles d'étanchéité 115. Ces rondelles d'étanchéité sont inclinées, comme visible dans la partie basse de la figure 4, radialement en allant du fût 135 des rivets 134,135,236 aux moyens élastiques 150. Les rondelles 115 sont montées sous précontrainte.

L'autre rondelle d'étanchéité 115 s'appuie à sa périphérie externe sur la pièce de fermeture 103 qui est également simplifiée. Ainsi lors du mouvement relatif entre les deux masses la rondelle de frottement 205, après rattrapage du jeu entre les échancrures 272 et les fûts 135, est admise à frotter contre la pièce 303 et contre la rondelle d'application 206 calée en rotation sur la partie 403.

Grâce à toutes ces dispositions on augmente l'inertie de la première masse, on simplifie le voile ou disque 140 ainsi que la pièce de fermeture 103.

## Revendications

1. Volant amortisseur, notamment pour véhicule automobile, du genre comportant deux masses coaxiales (1, 6), montées mobiles l'une par rapport à l'autre à l'encontre de moyens élastiques à action circonférentielle (150) et d'un dispositif de frottement à action axiale (170), l'une des masses, dite première masse (1), étant propre à être calée en rotation sur un arbre menant (30), tandis que l'autre masse (6), dite seconde masse, comporte un plateau de réaction (161) offrant une face de friction (125) pour un disque de friction (127) propre à être calée en rotation sur un arbre mené, caractérisé en ce que les moyens élastiques (150) sont disposés en dessous radialement de la périphérie interne de la face de friction (125) de la seconde masse (6) et en ce que la seconde masse (6) présente une cambrure (160) de façon à recouvrir partiellement les moyens élastiques (150) installés sur la première masse (1).

2. Volant selon la revendication 1, caractérisé en ce qu'un élément de fermeture (103), fixé sur la première masse (1), est interposé entre les moyens élastiques (150) et la seconde masse (6), en ce que les moyens élastiques (150) installés sur la première masse (1) s'appuient sur l'élément de fermeture (103), qui présente, pour logement des moyens élastiques (150), une partie cambrée (113) destinée à s'insérer dans la cambrure (160) de la seconde masse (6).

3. Volant selon la revendication 2, caractérisé en ce que la seconde masse (6) comporte des moyens de solidarisation (135) à un voile (140) qui est propre à agir sur les moyens élastiques (150), en ce que le voile (140) présente des logements (144) globalement en forme de U délimités par des bras externes radiaux (151) entre lesquels sont logés les moyens élastiques (150) et en ce que l'élément de fermeture (103) est embouti localement en regard desdits bras (151) pour appui des extrémités circonférentielles des moyens élastiques (150).

4. Volant selon la revendication 3, caractérisé en ce que la première masse (1) porte, en regard desdits bras (151) du voile (140) et des emboutis (156) de l'élément de fermeture (103), des plaquettes (155) pour appui des extrémités des moyens élastiques (150).

5. Volant selon la revendication 4, caractérisé en ce que la première masse (1) est constituée par un disque épais qui est creusé pour loger les moyens élastiques (150) et qui définit avec la partie cambrée (113) de l'élément de fermeture (103) un canal annulaire constituant une cavité.

6. Volant selon la revendication 5, caractérisé en ce que ladite cavité est rendue étanche par un double joint annulaire (115) disposé entre la première masse (1) et le voile (140) d'une part, le voile (140) et l'extrémité (114) de l'élément de fermeture (103) d'autre part.

7. Volant selon l'une quelconque des revendications 2 à 6, caractérisé en ce que le dispositif de frottement (170) est disposé radialement au dessus des moyens élastiques (150) et en ce que le dispositif de frottement (170) comporte une portée de frottement (203) disposée dans un logement (110) de ladite première masse (1), sur sa face en regard de ladite seconde masse (6), sur laquelle est disposée une rondelle de frottement (105), dont les mouvements sont entraînés par ladite seconde masse (6), sur laquelle appuie une rondelle d'application (106) rappelée élastiquement vers elle par des moyens élastiques à action axiale (107).

8. Volant selon la revendication 7, caractérisé en ce que la portée de frottement (203) est constituée par une zone plane d'extrémité de l'élément de fermeture (103) qui présente de plus un rebord (109) permettant par une rondelle annulaire (108) de maintenir en action les moyens élastiques à action axiale (107).

9. Volant selon la revendication 8, caractérisé en ce que la mise en frottement est assurée par l'engagement d'au moins un bossage (171) disposé par moulage, sur la face en regard de ladite seconde masse (6).

10. Volant selon la revendication 9, caractérisé en ce que l'engagement est obtenu par un rebord interne (172) correspondant du diamètre intérieur de la rondelle de frottement, notamment de façon à obtenir un engrènement avec jeu.

11. Volant selon la revendication 4, caractérisé en ce que le dispositif de frottement est disposé radialement en dessous des moyens élastiques (150) et comporte une pièce (303) offrant une portée transversale à une rondelle de frottement (205), en ce que ladite pièce (303) est fixée sur la première masse (1) et offre un appui à une rondelle d'étanchéité (115).

12. Volant selon l'une quelconque des revendications 1 à 11, caractérisé en ce que la deuxième masse (6) présente une première partie interne (149) poursuivie vers l'extérieur par la cambrure (160), qui se termine par une seconde partie en forme d'anneau plan (161) servant de plateau de réaction à l'embrayage.

13. Volant selon les revendications 12 et 3 prises conjointement, caractérisé en ce que ledit voile (140) présente un retour axial (100) pénétrant à l'intérieur d'un alésage de ladite première masse (1) et qui est reliée en rotation par un palier antifriction (146), en ce que les moyens de fixation (135) du voile (140) à la seconde masse (6) sont disposés à proximité du retour axial (100) du voile (140) et en ce que la première partie interne (149) est en forme d'anneau plan (149).

14. Volant selon la revendication 12, caractérisé en ce que la seconde masse (6) est conformée à sa périphérie interne pour présenter un retour tubulaire (200) pénétrant à l'intérieur d'un alésage de ladite première masse (1) et qui est reliée en rotation par un palier antifriction (146), en ce que la seconde masse (6) est d'épaisseur décroissante à sa périphérie interne et en ce que la seconde masse (6) est inclinée en allant de la cambrure (160) au retour tubulaire (200) avec formation d'un arrondi pour raccordement du retour tubulaire (200) à la partie principale de la seconde masse (6).

15. Embrayage, notamment pour véhicule automobile, comportant un disque de friction (127) avec un moyeu (101) solidaire d'un disque (128) portant des garnitures de friction (106), caractérisé en ce qu'il est équipé d'un volant amortisseur selon l'une quelconque des revendications précédentes, en ce que le disque (128) est cambré en regard desdits moyens élastiques (150), en ce que le moyeu (101) présente une partie inclinée et pénètre dans un alésage interne de la première masse (1), et en ce que l'une des garnitures de friction (106) est destinée à venir en contact avec le plateau de réaction (161) de la seconde masse (6).

## Patentansprüche

1. Dämpfungsschwungrad, insbesondere für Kraftfahrzeuge, umfassend zwei koaxiale Massen (1, 2), die im Verhältnis zueinander beweglich entgegen umfangsmäßig wirksamen elastischen Mitteln (150) und einer axial wirksamen Reibungsvorrichtung (170) gelagert sind, wobei eine der Massen, die als erste Masse (1) bezeichnet wird, drehfest mit einer treibenden Welle (30) verbunden werden kann, während die andere Masse (6), die als zweite Masse bezeichnet wird, eine Gegenanpreßplatte (161) umfaßt, die eine Reibfläche (125) für eine Reibungskupplungsscheibe (127) bietet, die drehfest mit einer getriebenen Welle verbunden werden kann , **dadurch gekennzeichnet,** daß die elastischen Mittel (150) radial unterhalb des inneren Umfangs der Reibfläche (125) der zweiten Masse (6) angeordnet sind und daß die zweite Masse eine Wölbung (160) aufweist, um die an der ersten Masse (1) angebrachten elastischen Mittel (150) teilweise zu überdecken.

2. Schwungrad nach Anspruch 1 , **dadurch gekennzeichnet,** daß ein an der ersten Masse (1) befestigtes Verschlußelement (103) zwischen den elastischen Mitteln (150) und der zweiten Masse (6) eingefügt ist, daß die an der ersten Masse (1) angebrachten elastischen Mittel (150) auf dem Verschlußelement (103) aufliegen, das zur Aufnahme der elastischen Mittel (150) einen gewölbten Teil (113) aufweist, der für das Einsetzen in die Wölbung (160) der zweiten Masse (6) bestimmt ist.

3. Schwungrad nach Anspruch 2 , **dadurch gekennzeichnet,** daß die zweite Masse (6) Verbindungsmittel (135) für die feste Verbindung mit einer Zwischenscheibe (140) umfaßt, die auf die elastischen Mittel (150) einwirken kann, daß die Zwischenscheibe (140) insgesamt U-förmige Aufnahmen (144) aufweist, die durch äußere radiale Arme (151) begrenzt werden, zwischen denen die elastischen Mittel (150) aufgenommen sind, und daß das Verschlußelement (103) für die Auflage der Umfangsenden der elastischen Mittel (150) gegenüber den besagten Armen (151) örtlich vertieft ist.

4. Schwungrad nach Anspruch 3 , **dadurch gekennzeichnet,** daß die erste Masse (1) gegenüber den besagten Armen (151) der Zwischenscheibe (140) und den Vertiefungen (156) des Verschlußelements (103) Beläge (155) für die Auflage der Enden der elastischen Mittel (150) trägt.

5. Schwungrad nach Anspruch 4 , **dadurch gekennzeichnet,** daß die erste Masse (1) aus einer dicken Scheibe besteht, die ausgetieft ist, um die elastischen Mittel (150) aufzunehmen, und die zusammen mit dem gewölbten Teil (113) des Verschlußelements (103) einen ringförmigen Kanal definiert, der einen Hohlraum bildet.

6. Schwungrad nach Anspruch 5 , **dadurch gekennzeichnet,** daß der besagte Hohlraum durch einen Doppeldichtring (115) abgedichtet wird, der zwischen der ersten Masse (1) und der Zwischenscheibe (140) einerseits und der Zwischenscheibe (140) und dem Ende (114) des Verschlußelements (103) andererseits angeordnet ist.

7. Schwungrad nach einem der Ansprüche 2 bis 6, **dadurch gekennzeichnet,** daß die Reibungsvorrichtung (170) radial oberhalb der elastischen Mittel (150) angeordnet ist und daß die Reibungsvorrichtung (170) eine Reibauflagefläche (203) umfaßt, die in einer Aufnahme (110) der besagten ersten Masse (1) auf ihrer der besagten zweiten Masse (6) gegenüberliegenden Fläche angeordnet ist, auf der eine Reibscheibe (105) angeordnet ist, deren Bewegungen durch die besagte zweite Masse (6) herbeigeführt werden, auf der eine Anpreßscheibe (106) anliegt, die durch axial wirksame elastische Mittel (107) elastisch zu ihr zurückgeholt wird.

8. Schwungrad nach Anspruch 7, **dadurch gekennzeichnet,** daß die Reibauflagefläche (203) aus einer ebenen Abschlußzone des Verschlußelements. (103) besteht, das außerdem eine Randleiste (109) aufweist, die es durch eine ringförmige Scheibe (108) ermöglicht, die Wirkung der axial wirksamen elastischen Mittel (107) aufrechtzuerhalten.

9. Schwungrad nach Anspruch 8 , **dadurch gekennzeichnet,** daß der Reibschluß durch den Eingriff mindestens eines Vorsprungs (171) bewirkt wird, der an der gegenüberliegenden Fläche der besagten zweiten Masse (6) angeformt ist.

10. Schwungrad nach Anspruch 9 , **dadurch gekennzeichnet,** daß der Eingriff durch eine entsprechende innere Randleiste (172) des Innendurchmessers der Reibscheibe erfolgt, wobei insbesondere ein mit Spiel erfolgendes Ineinandergreifen herbeigeführt wird.

11. Schwungrad nach Anspruch 4 , **dadurch gekennzeichnet**, daß die Reibungsvorrichtung radial unterhalb der elastischen Mittel (150) angeordnet ist und ein Element (303) umfaßt, das eine Querauflagefläche für eine Reibscheibe (205) bietet, daß das besagte Element (303) an der ersten Masse (1) befestigt ist und eine Auflage für eine Dichtungsscheibe (115) bietet.

12. Schwungrad nach einem der Ansprüche 1 bis 11, **dadurch gekennzeichnet**, daß die zweite Masse (6) einen ersten inneren Teil (149) aufweist, der nach außen durch die Wölbung (160) fortgesetzt wird, die durch einen zweiten Teil in Form eines ebenen Rings (161) abgeschlossen wird, der als Gegenanpreßplatte für die Kupplung dient.

13. Schwungrad nach den Ansprüchen 12 und 3 in Kombination, **dadurch gekennzeichnet,** daß die besagte Zwischenscheibe (140) einen axialen Rücksprung (100) aufweist, der in das Innere einer Bohrung der besagten ersten Masse (1) eindringt und der drehfest durch ein Antrifriktionslager (146) verbunden ist, daß die Befestigungsmittel (135) zur Befestigung der Zwischenscheibe (140) an der zweiten Masse (6) in der Nähe des axialen Rücksprungs (100) der Zwischenscheibe (140) angeordnet sind und daß der erste innere Teil (149) in Form eines ebenen Rings (149) ausgeführt ist.

14. Schwungrad nach Anspruch 12, **dadurch gekennzeichnet,** daß die zweite Masse (6) an ihrem inneren Umfang so gestaltet ist, daß sie einen rohrförmigen Rücksprung (200) aufweist, der in das Innere einer Bohrung der besagten ersten Masse (1) eindringt und der drehfest durch ein Antifriktionslager (146) verbunden ist, daß die zweite Masse (6) mit einer abnehmenden Dicke an ihrem inneren Umfang ausgeführt ist und daß die zweite Masse (6) von der Wölbung (160) zum rohrförmigen Rücksprung (200) geneigt ist, wobei eine Rundung für den Anschluß des rohrförmigen Rücksprungs (200) an den Hauptteil der zweiten Masse (6) gebildet wird.

15. Kupplung, insbesondere für Kraftfahrzeuge, umfassend eine Reibungskupplungsscheibe (127) mit einer Nabe (101), die fest mit einer Reibbeläge (106) tragenden Scheibe (128) verbunden ist , **dadurch gekennzeichnet,** daß sie mit einem Dämpfungsschwungrad nach einem der vorangehenden Ansprüche ausgerüstet ist, daß die Scheibe (128) gegenüber den besagten elastischen Mitteln (150) gewölbt ist, daß die Nabe (101) einen geneigten Teil aufweist und in eine Innenbohrung der ersten Masse (1) eindringt und daß einer der Reibbeläge (106) dazu bestimmt ist, mit der Gegenanpreßplatte (161) der zweiten Masse (6) in Kontakt zu kommen.

## Claims

1. A damped flywheel, especially for a motor vehicle, of the kind comprising two coaxial masses (1, 6), mounted for movement of one with respect to the other against circumferentially acting resilient means (150) and against an axially acting friction means (170), with one of the masses, referred to as the first mass (1), being adapted to be mounted in rotation on a driving shaft (30), while the other mass (6), referred to as the second mass, comprises a reaction plate (161) offering a friction face (125) for a friction disc (127) which is adapted to be mounted in rotation on a driven shaft, characterised in that the resilient means (150) are disposed radially inwardly of the inner periphery of the friction face (125) of the second mass (6), and in that the second mass (6) has an arched portion (160) such as to partially cover the resilient means (150) mounted on the first mass (1).

2. A flywheel according to Claim 1, characterised in that a closure element (103), fixed on the first mass (1), is interposed between the resilient means (150) and the second mass (6), in that the resilient means (150) mounted on the first mass (1) bear on the closure element (103), which has, for housing the resilient means (150), an arched portion (113) adapted to fit within the arched portion (160) of the second mass (6).

3. A flywheel according to Claim 2, characterised in that the second mass (6) comprises means (135) for fastening to a damper plate (140) which is adapted to act on the resilient means (150), in that the damper plate (140) has generally U-shaped recesses (144) bounded by external radial arms (151), between which the resilient means (150) are fitted, and in that the closure element (103) is deformed locally in facing relationship with the same arms (151) for engagement of the circumferential ends of the resilient means (150).

4. A flywheel according to Claim 3, characterised in that the first mass (1) carries, in facing relationship with the said arms (151) of the damper plate (140) and press-formed elements (156) of the closure element (103), pads (155) for engagement of the ends of the resilient means (150).

5. A flywheel according to Claim 4, characterised in that the first mass (1) comprises a thick disc which is made hollow so as to accommodate the resilient means (150), and which defines, with the arched portion (113) of the closure element (103), an annular channel constituting a cavity.

6. A flywheel according to Claim 5, characterised in that the said cavity is sealed by an annular double seal (115) disposed between the first mass (1) and the damper plate (140) on the one hand, and between the damper plate (140) and the end (114) of the closure element (103) on the other hand.

7. A flywheel according to any one of Claims 2 to 6, characterised in that the friction means (170) is disposed radially outside the resilient means (150), and in that the friction means (170) comprises a friction surface (203) disposed in a recess (110) of the said first mass (1), on the surface thereof facing the said second mass (6), on which there is disposed a friction ring (105), the movement of which is driven by the said second mass (6), and on which there engages a thrust ring (106) which is urged resiliently towards it by axially acting resilient means (107).

8. A flywheel according to Claim 7, characterised in that the friction surface (203) is defined by a flat end zone of the closure element (103), which further includes a flange (109) which, through an annular ring (108), keeps the axially acting resilient means (107) active.

9. A flywheel according to Claim 8, characterised in that the frictional engagement is obtained by engagement of at least one projecting element (171) formed by moulding on the facing surface of the said second mass (6).

10. A flywheel according to Claim 9, characterised in that the engagement is obtained by means of an internal flange (172) corresponding to the inner diameter of the friction ring, in particular in order to obtain meshing with a clearance.

11. A flywheel according to Claim 4, characterised in that the friction means is disposed radially inside the resilient means (150) and includes a member (303) which offers a transverse surface to a friction ring (205), and in that the said member (303) is fixed on the first mass (1) and offers an abutment to a sealing ring (115).

12. A flywheel according to any one of Claims 1 to 11, characterised in that the second mass (6) has a first internal member (149) continued towards the outside by the arched portion (160), which is terminated by a second portion in the form of a flat annular ring (161) serving as the reaction plate of the clutch.

13. A flywheel according to Claims 12 and 3 taken together, characterised in that the said damper plate (140) has an axial flange (100) which penetrates into the interior of a bore of the said first mass (1), and which is coupled in rotation through an anti-friction bearing (146), in that the means (135) fastening the damper plate (140) to the second mass (6) are disposed close to the axial flange (100) of the damper plate (140), and in that the first internal portion (149) is in the form of a flat annular ring (149).

14. A flywheel according to Claim 12, characterised in that the second mass (6) is configured at its inner periphery in such a way as to have a tubular flange (200), which penetrates into the interior of a bore of the said first mass (1) and which is coupled in rotation through an anti-friction bearing (146), in that the thickness of the second mass (6) decreases to its inner periphery, and in that the second mass (6) is inclined, going from the arched portion (160) to the tubular flange (200), so as to define a rounded portion for joining the tubular flange (200) to the main portion of the second mass (6).

15. A clutch, especially for a motor vehicle, comprising a friction disc (127) with a hub (101) fixed to a disc (128) carrying friction liners (106), characterised in that it is equipped with a damped flywheel according to any one of the preceding Claims, in that the disc (128) is arched facing the said resilient means (150), in that the hub (101) has an inclined portion and penetrates into an internal bore of the first mass (1), and in that one of the friction liners (106) is adapted to make contact with the reaction plate (161) of the second mass (6).
